# EUROPÄISCHE PATENTSCHRIFT

(11) **EP 0 368 839 B1**
(45) Veröffentlichungstag und Bekanntmachung des Hinweises auf die Patenterteilung: **08.09.1993**
(21) Anmeldenummer: 89890294.5
(22) Anmeldetag: 09.11.1989
(51) Int. Cl.: A23L 3/34, A21D 15/02

(54) **Verfahren zum Aufbewahren von biologischen Substanzen, sowie Einrichtung zur Durchführung dieses Verfahrens**
Method for preserving biological substances, and apparatus for carrying out this method
Procédé de conservation de substances biologiques et dispositif pour sa mise en oeuvre

(30) Priorität: 09.11.1988 AT 2748/88
(43) Veröffentlichungstag der Anmeldung: 16.05.1990
(73) Patentinhaber: SM VACUUM SOLICH & MAYER, A-1140 Wien (AT)
(72) Erfinder: Solich, Karl, A-1140 Wien (AT)
(74) Vertreter: Kretschmer, Adolf

(56) Entgegenhaltungen:
- DE-A- 1 492 672
- DE-A- 2 812 781
- DE-A- 3 343 800
- FR-A- 1 023 337
- FR-A- 2 559 355
- FR-E- 30 734
- US-A- 3 958 028

## Beschreibung

Die Erfindung bezieht sich auf ein Verfahren zum Aufbewahren von biologischen Substanzen, insbesondere Lebensmitteln, wie Fleisch, Backwaren, Obst, Gemüse, insbesondere zur Verlängerung der Haltbarkeit derartiger Substanzen, bei welchem das aufzubewahrende Gut in einem geschlossenen Raum gekühlt und unter Unterdruck gesetzt wird, sowie auf eine Einrichtung zum Aufbewahren von biologischen Substanzen, insbesondere Lebensmitteln, wie Fleisch, Backwaren, Obst, Gemüse od.dgl., mit einem kühlbaren, durch einen Deckel bzw. eine Türe schließbaren Aufbewahrungsraum, an welchen eine Vakuumpumpe anschließbar ist.

Aus der DE-OS 28 12 781 ist bereits ein Verfahren und eine Vorrichtung zur Lagerung und/oder zum Transport von verderblichen Lebensmitteln bekanntgeworden, wobei die Lagerung in Containern erfolgte, in welchen ein Vakuum erzeugt und aufrechterhalten wird. Die bekannten Container konnten darüberhinaus wahlweise gekühlt werden.

Aus der DE-OS 14 92 672 ist bereits eine Einrichtung und ein Verfahren zur langfristigen Bewahrung von Lebensmitteln bekanntgeworden, bei welchem die aufzubewahrenden Güter, ohne daß sie mit Wasser in Kontakt gebracht werden, im Vakuum aufbewahrt werden und gleichzeitig ihre Austrocknung durch Feuchtigkeitsverlust vermieden werden soll.

Ausgehend von derartigen, bekannten Einrichtungen und Verfahren, bei welchen durch gleichzeitige Anwendung von Unterdruck und Kühlung eine Verlängerung der Haltbarkeit erzielt werden konnte, zielt die Erfindung nunmehr darauf ab, ein Verfahren zu schaffen, mit welchem die Haltbarkeit weiter verlängert werden kann und unerwünschte Nebenwirkungen, wie beispielsweise eine Übertrocknung des gelagerten Gutes, verhindert werden können. Zur Lösung dieser Aufgabe besteht das erfindungsgemäße Verfahren im wesentlichen darin, daß die Feuchtigkeit im geschlossenen Raum gemessen wird, daß in Abhängigkeit von der gemessenen Feuchtigkeit bei Überschreiten eines oberen Feuchtigkeitsgrenzwertes eine Vakuumpumpe eingeschaltet und bei Unterschreiten eines unteren Feuchtigkeitsgrenzwertes die Vakuumpumpe abgeschaltet wird, daß eine Druckerhöhung vor der Entnahme des gelagerten Gutes unter Einströmen eines Inertgases, insbesondere Stickstoff oder CO₂, vorgenommen wird, und daß während der Lagerung zyklisch kurzzeitig ein Überdruck von 1 bis 2 bar unter Verwendung eines Inertgases eingestellt wird, worauf neuerlich evakuiert wird.

Dadurch, daß die Feuchtigkeit in dem unter Unterdruck setzbaren und gekühlten Raum gemessen wird und die jeweiligen Meßwerte zur Steuerung der Pumpe herangezogen werden, kann ein oberer und ein unterer Grenzwert für die Feuchtigkeit vorgegeben werden, wobei erfindungsgemäß bei Überschreiten eines oberen Feuchtigkeitsgrenzwertes die Vakuumpumpe eingeschaltet wird und bei Unterschreiten eines unteren Feuchtigkeitsgrenzwertes die Vakuumpumpe abgeschaltet wird. Insbesondere das Abschalten der Vakuumpumpe bei Unterschreiten eines unteren Feuchtigkeitsgrenzwertes verhindert hiebei die Übertrocknung des zu lagernden Gutes und die Überwachung einer Obergrenze für die maximal zulässige Feuchtigkeit stellt sicher, daß die Haltbarkeit wesentlich verlängert werden kann. Die Möglichkeit, unterschiedliche Grenzwerte für den oberen und den unteren Grenzwert vorzugeben, ermöglicht hiebei eine wesentlich verbesserte Anpassung der Lagerbedingungen an das jeweilige zu lagernde Gut. Der jeweils für eine optimale Lagerung günstigste Bereich der Feuchtigkeit während der Lagerung kann hiebei besonders im Hinblick darauf gewählt werden, daß die Frischeeigenschaften des zu lagernden Gutes voll erhalten bleiben, ohne daß hiebei durch übermäßige Feuchtigkeit die Haltbarkeit beeinträchtigt wird. Dadurch, daß zur Druckerhöhung vor der Entnahme des gelagerten Gutes ein Inertgas verwendet wird, kann die an der Oberfläche des gelagerten Gutes auftretende Oxidation, insbesondere bei Fleisch, Fisch oder Geflügel, deutlich verringert werden. Dadurch, daß während der Lagerung zyklisch kurzzeitig ein Überdruck von 1 bis 2 bar unter Verwendung eines Inertgases eingestellt wird, worauf neuerlich evakuiert wird, kann das Bakterienwachstum in dem geschlossenen Lagerraum deutlich herabgesetzt werden. Bei dieser Verfahrensführung wird sowohl das Wachstum von Bakterien, welche unter vermindertem Druck als auch von solchen, welche unter erhöhtem Druck bevorzugt wachsen, unterdrückt. Hiebei genügt es, wenn innerhalb eines Intervalls von etwa 6 Stunden einmal für etwa 10 bis 15 min ein Inertgasüberdruck von 1 bis 2 bar der Apparatur aufrechterhalten wird. Durch eine derartige zyklische Verfahrensführung wird vor allem eine schnellere Reifung des gelagerten Gutes bei gleichzeitig verbesserter Haltbarkeit erreicht. Bei dieser zyklischen Verfahrensweise kann die Keimbildungsgeschwindigkeit auch beim Belüften mit Luft äußerst niedrig gehalten werden, wenn in den Luftkreislauf ein Entkeimungssystem eingeschaltet wird. Derartige Entkeimungssysteme arbeiten beispielsweise durch teilweise Ionisation des Gasstromes, wodurch wiederum die Oxidation der Lebensmitteloberflächen hintangehalten wird. Auch bei dieser Verfahrensweise ist eine Zykluszeit von 6 bis 8 Stunden ausreichend.

Die erfindungsgemäße Einrichtung zum Aufbewahren von biologischen Substanzen, insbesondere Lebensmitteln, wie Fleisch, Backwaren, Obst, Gemüse, mit einem kühlbaren, durch einen Deckel bzw. eine Türe schließbaren Aufbewahrungsraum, an welchen eine Vakuumpumpe anschließbar ist, ist hiebei im wesentlichen dadurch gekennzeichnet, daß im Aufbewahrungsraum ein Feuchtigkeitssensor angeordnet ist und daß der Feuchtigkeitssensor über eine Steuerschaltung mit dem Antrieb der Vakuumpumpe verbunden ist, daß der Deckel mit einem Schalter zusammenwirkt, welcher den Antrieb der Vakuumpumpe beim Schließen des Deckels einschaltet, daß der Schalter über ein Zeitglied mit dem Antrieb der Vakuumpumpe verbunden ist, daß wenigstens ein zusätzlicher Anschluß für eine Inertgasleitung vorgesehen ist und daß in die Inertgasleitung ein steuerbares Ventil eingeschaltet ist, welches mit einem mit dem Schließglied des Deckels oder der Türe zusammenwirkenden Schalter verbunden ist. Durch die Anordnung eines Feuchtigkeitssensors im Aufbewahrungsraum wird die Voraussetzung dafür geschaffen, die Feuchtigkeit im Inneren des Aufbewahrungsraumes zu überwachen und die jeweils gemessenen Werte können über eine Steuerschaltung unmittelbar mit dem Antrieb der Vakuumpumpe verbunden werden. Die Handhabung einer derartigen Einrichtung läßt sich dadurch noch weiter verbessern, daß der Deckel mit einem Schalter zusammenwirkt, welcher den Antrieb der Vakuumpumpe beim Schließen des Deckels einschaltet, wobei vorzugsweise der Schalter über ein Zeitglied mit dem Antrieb der Vakuumpumpe verbunden ist. Beim erstmaligen Einbringen von zu lagerndem Gut ist die Verwendung eines Zeitgliedes zur zeitverzögerten Abschaltung der Pumpe vorteilhaft, um zunächst einen Grundwert für den Unterdruck einzustellen. Im Zuge der Lagerung kann die Feuchtigkeit im Inneren des Aufbewahrungsraumes wiederum ansteigen, wodurch die Lagerfähigkeit bzw. die Haltbarkeit beeinträchtigt werden könnte, wobei erst nach dem erstmaligen Anlegen, eines Vakuums nach dem Schließen des Deckels bzw. der Türe ein intermittierender Betrieb der Vakuumpumpe in Übereinstimmung mit den gemessenen Feuchtigkeitsgehalten erfolgt. Die schaltungsmäßigen Voraussetzungen für die durch das erfindungsgemäße Verfahren gewünschte Steuerung der Vakuumpumpe in Abhängigkeit von Feuchtigkeitsmeßwerten werden hiebei dadurch sichergestellt, daß der Feuchtigkeitssensor bei Überschreiten eines vorgegebenen oberen Feuchtigkeitsgrenzwertes zum Einschalten der Vakuumpumpe und bei Unterschreiten eines unteren Feuchtigkeitsgrenzwertes zum Ausschalten der Vakuumpumpe geschaltet ist.

Um in einfacher Weise aus dem Lagerraum gelagertes Gut entnehmen zu können und die Handhabung weiter zu erleichtern, ist die Ausbildung so getroffen, daß der Deckel ein Entlastungsventil trägt, dessen Öffnung mit dem Betätigungsglied eines Schließgliedes für den Deckel bzw. die Türe gekoppelt ist. Bei einer derartigen Ausbildung genügt eine Betätigung des für die Öffnung des Behälters am Deckel oder an der Türe vorgesehenen Betätigungsgliedes, um zunächst ein Entlastungsventil und in der Folge ein Schließglied zu betätigen, wobei durch Betätigung des Schließgliedes in Öffnungsrichtung ein Öffnen des Deckels bzw. der Türe nach einem zumindest weitgehenden Druckausgleich möglich wird. Um ein Öffnen des Aufbewahrungsraumes auch während des Betriebes der Vakuumpumpe in einfacher Weise sicherzustellen, ist die Ausbildung so getroffen, daß das Schließglied für den Deckel bzw. die Türe mit einem Schalter zusammenwirkt, welcher über die Steuerschaltung mit dem Antrieb der Vakuumpumpe gekoppelt ist, wobei bei einer Betätigung des Schließgliedes über den Schalter der Antrieb der Vakuumpumpe abgestellt wird, wodurch auch eine entsprechende Schonung der Pumpe erzielt wird. In besonders einfacher Weise ist die Ausbildung so getroffen, daß in der Leitung vom Aufbewahrungsraum zur Vakuumpumpe ein steuerbares Druckhalteventil, insbesondere Rückschlagventil angeordnet ist, welches mit dem betrieb der Vakuumpumpe über die Steuerschaltung verbunden ist, wobei bei einem Öffnen des Deckels bzw. der Türe auch das Druckhalteventil betätigt werden kann, um in den Leitungen zur Vakuumpumpe das bestehende Vakuum aufrechtzuerhalten.

Um den Druck im Lagerbehälter dem Umgebungsdruck anpassen zu können, ist die Ausbildung so getroffen, daß wenigstens ein zusätzlicher Anschluß für eine Inertgasleitung vorgesehen ist, wobei in besonders bevorzugter Weise in die Inertgasleitung ein steuerbares Ventil eingeschaltet ist, welches mit einem mit dem Schließglied des Deckels oder der Türe zusammenwirkenden Schalter verbunden ist. Dadurch, daß in die Inertgasleitung ein steuerbares Ventil eingeschaltet ist, welches mit einem mit dem Schließglied der Türe zusammenwirkenden Schalter verbunden ist, wird sichergestellt, daß die Türe des Lagerbehälters nur bei Übereinstimmung des Innen- und des Außendruckes geöffnet werden kann.

Um die optimale Reifung der in dem Lagerbehälter enthaltenen Güter ohne Öffnen der Türe und ohne Entnahme der Güter überprüfen zu können, sind in vorteilhafter Weise pH-Meßsonden im Inneren der Einrichtung angeordnet, deren Meßwerte außerhalb des Lagerraumes angezeigt werden. Durch diese Anordnung kann insbesondere bei Fleisch, Fisch und Geflügel die Güte und die Qualität der Waren an Hand des gemessenen pH-Wertes festgestellt werden.

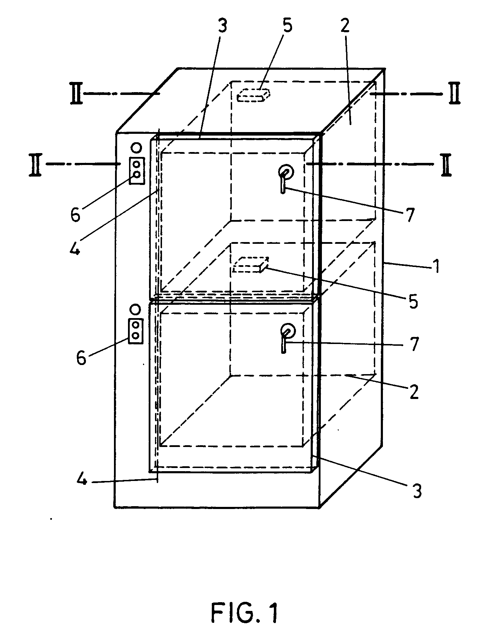

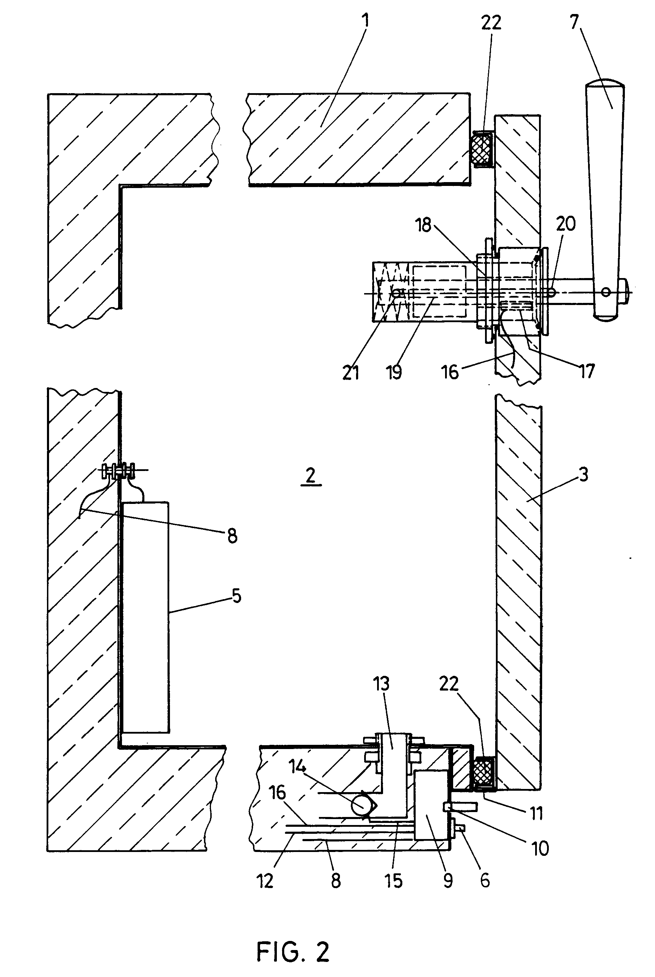

Die Erfindung wird nachfolgend an Hand von in der Zeichnung schematisch dargestellten Ausführungsbeispielen näher erläutert. In dieser zeigen: Fig.1 eine schematische, perspektivische Ansicht einer erfindungsgemäßen Einrichtung zum Aufbewahren von biologischen Substanzen, und Fig.2 einen Schnitt längs einer Ebene, wie sie von den Linien II-II der Fig.1 aufgespannt wird.

In Fig.1 ist eine Einrichtung zum Aufbewahren von biologischen Substanzen in Form eines Schrankes 1 dargestellt, welcher in zwei von einander getrennte Aufbewahrungsräume 2 für die biologischen Substanzen, wie beispielsweise Fleisch, Backwaren, Obst, Gemüse, unterteilt ist, wobei die Aufbewahrungsräume 2 jeweils durch eine Türe 3, welche um schematisch angedeutete Achsen 4 schwenkbar am Rahmen des Schrankes angelenkt sind, verschließbar sind. Die Aufbewahrungsräume 2 sind dabei in nicht näher dargestellter und bekannter Weise kühlbar und an eine Vakuumpumpe angeschlossen, um den jeweiligen Aufbewahrungsraum 2 nach dem Schließen des Deckels 3 unter Unterdruck setzen zu können. Im Inneren der Aufbewahrungsräume 2 ist jeweils ein Feuchtigkeitssensor 5 zur Messung der im geschlossenen Aufbewahrungsraum 2 herrschenden Feuchtigkeit angeordnet und mit einer Steuerschaltung verbunden, wie dies unter Bezugnahme auf Fig.2 näher erläutert werden wird. In Fig.1 sind weiters Regelung- und Anzeigeeinrichtungen 6 angedeutet, an welchen beispielsweise gewünschte Druck-, Temperatur- und Feuchtigkeitswerte eingestellt werden und überwacht werden können. Zum Öffnen der Türen 3 sind jeweils Betätigungsglieder 7 vorgesehen.

In Fig.2 ist in vergrößerter Darstellung ein Schnitt durch den Schrank 1 dargestellt. Im Inneren des Aufbewahrungsraumes 2 ist wiederum der Feuchtigkeitssensor 5 vorgesehen, welcher über eine Leitung 8 mit einer Auswerteschaltung 9 verbunden ist. Mit dieser Auswerteschaltung 9 stehen die in Fig.1 schematisch angedeuteten Regelungs- und Anzeigevorrichtungen 6 in Verbindung, und es ist weiters ein Mikroschalter 10 vorgesehen, welcher bei einer Betätigung der Tür 3 mit dieser über ein Betätigungselement 11 zusammenwirkt. Von der Steuerschaltung 9 wird weiters der Antrieb der nicht näher dargestellten Vakuumpumpe über eine Steuerleitung 12 gesteuert, wobei in der Leitung 13, über welche der Aufbewahrungsraum 2 evakuiert wird, ein Druckhalteventil, insbesondere Rückschlagventil 14 angeordnet ist, welches über eine Steuerleitung 15 mit der Auswerteschaltung 9 in Verbindung steht. Die Auswerteschaltung 9 ist darüberhinaus über eine Steuerleitung 16 mit einem Schalter 17 verbunden, wobei dieser Schalter 17 mit dem vom Betätigungsglied 7 betätigten Schließglied 18 zusammenwirkt. Für eine Belüftung des Aufbewahrungsraumes 2 vor dem Öffnen der Tür 3, d.h. für ein Angleichen des im Aufbewahrungsraum 2 herrschenden Druckes an den Umgebungsdruck, ist im Schließglied 18 ein Kanal bzw. eine Bohrung 19 vorgesehen, welche in der in Fig.2 dargestellten Stellung des Betätigungsgliedes 7 sowie des Schließgliedes 18 eine Verbindung zwischen dem Außenraum und dem Aufbewahrungsraum 2 über Öffnungen bzw. Bohrungen 20 und 21 sicherstellt. Bei einem Verdrehen des Schließgliedes 18 in die Schließstellung wird die Verbindung zwischen der Außenumgebung und dem Aufbewahrungsraum über den Kanal 19 unterbrochen, so daß ein entsprechender Unterdruck im Aufbewahrungsraum 2 aufgebaut und aufrechterhalten werden kann. Für die Abdichtung sind zwischen dem Rahmen des Schrankes und der Türe 3 Dichtungen 22 vorgesehen.

Anstelle einer Belüftung durch Verdrehen des Schließgliedes 18 kann der Aufbewahrungsraum 2 auch über ein Magnetventil belüftet werden. Hiezu genügt es, das Rückschlagventil 14 magnetisch zu öffnen und mit einer Entlastungsleitung zu verbinden. Bei Betätigung des Türgriffes 7 wird hiebei beispielsweise in dem Schalter 17 ein derartiges Belüftungsventil eingeschaltet. Weiters kann ein Mikroschalter zur Öffnung des Magnetventiles im Türgriff selbst angeordnet sein.

Nach einem Schließen der Türe 3 wird über den Mikroschalter 10 der Antrieb der Vakuumpumpe über die Steuerleitung 12 eingeschaltet, wobei mit dem Mikroschalter 10 ein Zeitglied zusammenwirkt, welches den Betrieb der Vakuumpumpe nach einem Schließen der Türe 3 über ausreichend lange Zeit sicherstellt, um einen ersten Grundwert für den Unterdruck im Aufbewahrungsraum zu erhalten. Der im Aufbewahrungsraum 2 herrschende Unterdruck liegt dabei im allgemeinen unter 100 mbar, welcher für entsprechende Haltbarkeit der zu lagernden Produkte weiter abgesenkt werden kann. Nach einem Anlegen eines Grundwertes für den Unterdruck nach dem Schließen der Türe wird in weiterer Folge der Betrieb der Vakuumpumpe derart in Abhängigkeit von der vom Feuchtigkeitssensor 5 im Aufbewahrungsraum gemessenen Feuchtigkeit gesteuert, daß bei Unterschreiten einer unteren Feuchtigkeitsgrenze die Pumpe abgeschaltet wird und bei Überschreiten eines oberen Feuchtigkeitsgrenzwertes die Vakuumpumpe eingeschaltet wird. Die entsprechenden Grenzwerte können dabei in Abhängigkeit von dem zu lagernden Gut über die Einstelleinrichtungen 6 entsprechend eingegeben werden. Für ein Öffnen der Türe 3 wird bei einer Betätigung des Betätigungsgliedes 7 über den damit zusammenwirkenden Schalter 17 über die Steuerschaltung 9 zunächst das Druckhalteventil 14 geschlossen als auch die Vakuumpumpe, falls sie zum Öffnungszeitpunkt in Betrieb sein sollte, abgeschaltet und über die Verbindungsbohrungen 19, 20, 21 der Druck im Innenraum des Aufbewahrungsraumes 2 an den Umgebungsdruck angeglichen. Durch Betätigung des Betätigungsgliedes 7 und des damit verbundenen Schließgliedes 18 wird gleichzeitig die Verriegelung der Türe 9 gelöst.

## Patentansprüche

1. Verfahren zum Aufbewahren von biologischen Substanzen, insbesondere Lebensmitteln, wie Fleisch, Backwaren, Obst, Gemüse, zur Verlängerung der Haltbarkeit derartiger Substanzen, bei welchem das aufzubewahrende Gut in einem geschlossenen Raum gekühlt und unter Unterdruck gesetzt wird, dadurch gekennzeichnet, daß die Feuchtigkeit im geschlossenen Raum gemessen wird, daß in Abhängigkeit von der gemessenen Feuchtigkeit bei Überschreiten eines oberen Feuchtigkeitsgrenzwertes eine Vakuumpumpe eingeschaltet und bei Unterschreiten eines unteren Feuchtigkeitsgrenzwertes die Vakuumpumpe abgeschaltet wird, daß eine Druckerhöhung vor der Entnahme des gelagertes Gutes unter Einströmen eines Inertgases, insbesondere Stickstoff oder C0₂, vorgenommen wird, und daß während der Lagerung zyklisch kurzzeitig ein Überdruck von 1 bis 2 bar unter Verwendung eines Inertgases eingestellt wird, worauf neuerlich evakuiert wird.

2. Einrichtung zum Aufbewahren von biologischen Substanzen, insbesondere Lebensmitteln, wie Fleisch, Backwaren, Obst, Gemüse, mit einem kühlbaren, durch einen Deckel bzw. eine Türe schließbaren Aufbewahrungsraum, an welchen eine Vakuumpumpe anschließbar ist, dadurch gekennzeichnet, daß im Aufbewahrungsraum ein Feuchtigkeitssensor angeordnet ist und daß der Feuchtigkeitssensor über eine Steuerschaltung mit dem Antrieb der Vakuumpumpe verbunden ist, daß der Deckel mit einem Schalter zusammenwirkt, welcher den Antrieb der Vakuumpumpe beim Schließen des Deckels einschaltet, daß der Schalter über ein Zeitglied mit dem Antrieb der Vakuumpumpe verbunden ist, daß wenigstens ein zusätzlicher Anschluß für eine Inertgasleitung vorgesehen ist und daß in die Inertgasleitung ein steuerbares Ventil eingeschaltet ist, welches mit einem mit dem Schließglied des Deckels oder der Türe zusammenwirkenden Schalter verbunden ist.

3. Einrichtung nach Anspruch 2, dadurch gekennzeichnet, daß der Deckel ein Entlastungsventil trägt, dessen Öffnung mit dem Betätigungsglied eines Schließgliedes für den Deckel bzw. die Türe gekoppelt ist.

4. Einrichtung nach Anspruch 3, dadurch gekennzeichnet, daß das Schließglied für den Deckel bzw. die Türe mit einem Schalter zusammenwirkt, welcher über die Steuerschaltung mit dem Antrieb der Vakuumpumpe gekoppelt ist.

5. Einrichtung nach einem der Ansprüche 2 bis 4, dadurch gekennzeichnet, daß in der Leitung vom Aufbewahrungsraum zur Vakuumpumpe ein steuerbares Druckhalteventil, insbesondere Rückschlagventil, angeordnet ist, welches mit dem Antrieb der Vakuumpumpe über die Steuerschaltung verbunden ist.

6. Einrichtung nach einem der Ansprüche 2 bis 5, dadurch gekennzeichnet, daß pH-Meßsonden im Inneren der Einrichtung angeordnet sind, deren Meßwerte außerhalb des Lagerraumes angezeigt werden.

## Revendications

1. Procédé de conservation de substances biologiques, notamment des aliments comme de la viande, des articles de boulangerie-patisserie, des fruits, des légumes ou des substances analogues, pour prolonger la conservabilité de telles substances, procédé selon lequel on soumet la marchandise à conserver à un refroidissement dans une enceinte fermée et on la met sous dépression, caractérisé en ce que l'humidité régnant dans l'enceinte fermée est mesurée; en ce qu'en fonction de l'humidité mesurée et au cas où une valeur limite supérieure de l'humidité est excédée, une pompe à vide est enclenchée et, si une valeur limite inférieure de l'humidité est dépassée vers le bas, la pompe à vide est arrêtée; en ce que, avant de retirer la marchandise ainsi conservée, une élévation de la pression est réalisée par introduction d'un gaz inerte, notamment l'azote ou CO₂, et en ce que, pendant le magasinage, une surpression de 1 à 2 bars, réalisée avec l'utilisation d'un gaz inerte, est effectuée brièvement et de manière cyclique, après quoi il y a de nouveau mise sous dépression.

2. Dispositif pour la conservation de substances biologiques, notamment des aliments comme de la viande, des articles de boulangerie-patisserie, des fruits, des légumes, à l'aide d'une enceinte pour conservation, pouvant être refroidie, pouvant être fermée à l'aide d'un couvercle ou d'une porte, et à laquelle on peut raccorder une pompe à vide, caractérisé en ce que, dans l'espace de conservation est disposé un détecteur d'humidité et en ce que le détecteur d'humidité est relié, par l'intermédiaire d'un circuit de commande, à l'entraînement de la pompe à vide; en ce que le couvercle coopère avec un interrupteur qui enclenche l'entraînement de la pompe à vide lors de la fermeture du couvercle; en ce que l'interrupteur est relié à l'aide d'un élément de temporisation à l'entraînement de la pompe à vide, en ce qu'au moins une liaison supplémentaire est prévue pour un conduit de gaz inerte et en ce que, dans le conduit de gaz inerte, une soupape commandable est enclenchée, qui est reliée à un interrupteur coopérant avec l'élément de fermeture du couvercle ou de la porte.

3. Dispositif selon la revendication 2, caractérisé en ce que le couvercle porte une soupape de détente, dont l'ouverture est associée à l'organe de manoeuvre d'un organe de fermeture du couvercle ou de la porte.

4. Dispositif selon la revendication 3, caractérisé en ce que l'organe de fermeture du couvercle ou de la porte coopère avec un interrupteur qui est connecté, par l'intermédiaire du circuit de commande, avec l'entraînement de la pompe à vide.

5. Dispositif selon l'une des revendications 2 à 4, caractérisé en ce que, dans le conduit allant de l'enceinte de conservation à la pompe à vide, est disposée une soupape commandable de maintien de pression, notamment une soupape de non retour, qui est reliée par l'intermédiaire du circuit de commande à l'entraînement de la pompe à vide.

6. Dispositif selon l'une des revendications 2 à 5, caractérisé en ce qu'à l'intérieur du dispositif sont disposées des sondes de mesure de pH, dont les valeurs de mesure sont affichées à l'extérieur de l'enceinte de conservation.

## Claims

1. A method for preserving biological substances, in particular food such as meat, pastries, fruit, vegetables or the like for prolonging the life of such substances, wherein the goods to be preserved are chilled in an enclosed compartment and are placed under low pressure, characterized in that the humidity is measured in the enclosed compartment; that depending on the measured humidity, a vacuum pump is switched on when an upper humidity limit is exceeded, and the vacuum pump is switched off when the humidity falls below a lower humidity limit; that before the stored goods are taken out, an increased pressure is obtained by the admission of are inert gas, in particular, nitrogen or CO₂; and that during the storage, an excess pressure of 1 to 2 bar is set in short-term cycles using an inert gas, whereupon the evacuation is resumed.

2. An apparatus for preserving biological substances, in particular food such as meat, pastries, fruit, vegetables or the like, with a chillable storage compartment closable by a lid or a door, whereto a vacuum pump can be connected, characterized in that a humidity sensor is arranged in the storage compartment and that the humidity sensor is connected via a control circuit to the drive of the vacuum pump; that the lid cooperates with a switch which switches on the drive of the vacuum pump as the lid is closed, that the switch is connected via a timing element to the drive of the vacuum pump; that provision is made for at least one additional connection for are inert gas line; and that in the inert gas line there is interposed a controllable valve which is connected to a switch cooperating with the closing element of tree lid or of tree door.

3. An apparatus according to claim 2, characterized in that the lid carries a relief valve whose opening is coupled with the actuator of a closing element for the lid or the door.

4. An apparatus according to claim 3, characterized in that the closing element for the lid or the door cooperates with a switch which is coupled to the drive of the vacuum pump via the control line.

5. An apparatus according to one of claims 2 to 4, characterized in that in the line from the storage compartment to the vacuum pump, there is arranged a controllable pressure maintaining valve, in particular a non-return valve, which is connected to the drive of the vacuum pump via tree control circuit.

6. An apparatus according to one of claims 2 to 5, characterized in that pH-value measuring sensors are arranged inside the apparatus whose measured values are displayed outside the storage compartment.
